# EUROPEAN PATENT APPLICATION

(11) **EP 4 755 502 A1**
(43) Date of publication of application: **10.06.2026**
(21) Application number: 25851716.8
(22) Date of filing: 02.07.2025
(51) Int. Cl.: B01F 35/11, B01F 35/10, B01F 23/50, B08B 9/027, B08B 3/02, B08B 5/02, H01M 4/04

(54) **APPARATUS FOR MANUFACTURING ELECTRODE SLURRY**

(30) Priority: 05.08.2024 KR 20240103824
(71) Applicant: LG Energy Solution, Ltd., Seoul 07335 (KR)
(72) Inventor: KIM, Na Hyun, Daejeon 34122 (KR); CHUNG, Hae Kang, Daejeon 34122 (KR); KWON, Jeonghoon, Daejeon 34122 (KR); CHO, Hyung Suk, Daejeon 34122 (KR); SEO, Won Sic, Daejeon 34122 (KR); KIM, Gyeongtae, Daejeon 34122 (KR)
(74) Representative: Plasseraud IP
(86) International application number: PCT/KR2025/009419
(87) International publication number: WO 2026/034808

(57) **Abstract**

According to an embodiment of the present disclosure, provided is a device for producing an electrode slurry, comprising:
a mixer in which an electrode material and a solvent are mixed;
at least one liquid pipe that is connected to the mixer and introduces the solvent into the mixer; and
at least one powder pipe that is connected to the mixer and introduces a powder electrode material into the mixer,
wherein the powder pipe comprises a bent part in which the powder introducing direction changes, and comprises a first pipe connected to a powder tank in which a powder is stored on the basis of the bent part and a second pipe connected to the mixer, and the inside of the second pipe is formed with a high-pressure DIW spray nozzle that introduces distilled water (DI water, DIW) into the powder pipe and an air spray nozzle that introduces air.

## Description

### TECHNICAL FIELD

### Cross-Reference to Related Application(s)

This application claims priority to and the benefit of Korean Patent Application no. KR10-2024-0103824, filed on August 5, 2024, the disclosure of which is hereby incorporated by reference in its entirety.

The present disclosure relates to a device for producing an electrode slurry.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Presently, commercially available secondary batteries include nickel-cadmium batteries, nickel-hydrogen batteries, nickel-zinc batteries, and lithium secondary batteries. Of these batteries, the lithium secondary battery has come into the spotlight because they have advantages, for example, being freely charged and discharged, and having very low self-discharge rate and high energy density.

Such a lithium secondary battery is manufactured by a process in which an active material slurry containing a positive electrode active material or a negative electrode active material is coated onto a current collector substrate, respectively, and an electrode assembly including a positive electrode plate, a negative electrode plate and a separator interposed the two electrode plates is sealed together with an electrolyte solution in a battery case.

On the other hand, in order to produce the active material slurry, a mixing operation is performed, and at this time, the mixing operation is performed in a mixer, and various raw materials and a solvent are introduced into the mixer.

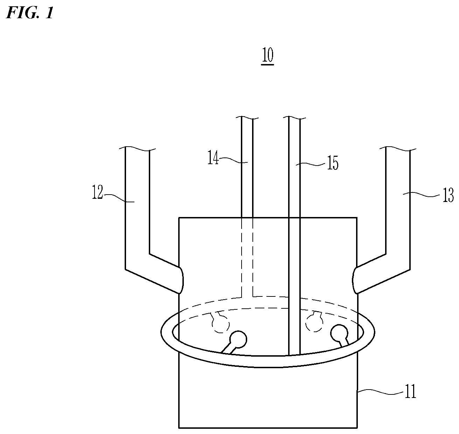

FIG. 1 is a schematic diagram showing a part of a conventional electrode slurry production device.

Referring to FIG. 1, the electrode slurry production device 10 includes a mixer 11 in which an electrode material and distilled water are mixed, powder pipes 12, 13 that introduce powder electrode materials into the mixer 11, and liquid pipes 14, 15 that introduce a solvent into the mixer 11.

However, this conventional electrode slurry production device 10 does not have a device for cleaning the inside of the powder pipes 12, 13 within the powder pipes 12, 13, which causes a problem that the powder pipes 12, 13 often become clogged at the time of introducing the powder-type raw material. Specifically, when slurry is continuously produced without cleaning operation of the powder pipes 12, 13, the powder is continuously entangled and accumulated in the powder pipes 12, 13, and the accumulated materials clog the powder pipes 12, 13.

In addition, the process in which the powder accumulates and detaches as described above is not uniform, which causes a problem that the composition of the finally produced slurry is distorted or the quality issues occur.

Therefore, there is an urgent need to develop a technology for a device for producing an electrode slurry that can solve these problems.

### DETAILED DESCRIPTION OF THE INVENTION

### Technical Problem

It is an object of the present disclosure to provide a device for producing an electrode slurry that can eliminate a phenomenon of clogging of a powder pipe located at the upper end of a mixer in an electrode slurry production device.

However, the technical objects to be solved by embodiments of the present disclosure are not limited to the above-described objects, and can be variously expanded within the scope of the technical idea included in the present disclosure.

### Technical Solution

According to an aspect of the present disclosure, there is provided a device for producing an electrode slurry, comprising:
a mixer in which an electrode material and a solvent are mixed;
at least one liquid pipe that is connected to the mixer and introduces the solvent into the mixer; and
at least one powder pipe that is connected to the mixer and introduces a powder electrode material into the mixer,
wherein the powder pipe comprises a bent part in which the powder introducing direction changes, and comprises a first pipe connected to a powder tank in which a powder is stored on the basis of the bent part and a second pipe connected to the mixer, and the inside of the second pipe is formed with a high-pressure DIW spray nozzle that introduces distilled water (DI water, DIW) into the powder pipe and an air spray nozzle that introduces air.

Here, the high-pressure DIW spray nozzle and the air spray nozzle may each include four or more nozzles.

In an embodiment, the high-pressure DIW spray nozzle may introduce DIW at a pressure of 2 bar to 10 bar, and the high-pressure DIW spray nozzle may spray DIW toward the bent part. At this time, the DIW introduction may be performed for 1 to 6 minutes.

The high-pressure DIW spray nozzle may be formed at a point between 1/3 and 9/10 of the total length of the second pipe on the basis of the longitudinal direction, which is the powder introducing direction of the second pipe from the bent part.

In another embodiment, the air spray nozzle introduces air into the second pipe when the DIP spraying is completed, the air spray nozzle may spray air at a pressure of 1 bar to 5 bar, and the air may be air between 20 and 30 degrees Celsius. At this time, the air introduction may be performed for 30 to 120 seconds.

The air spray nozzle may be formed at a point closer to the bent part than the high-pressure DIW spray nozzle. Specifically, the air spray nozzle may be formed at a point between 1/4 and 4/5 of the total length of the second pipe on the basis of the longitudinal direction, which is the powder introducing direction of the second pipe from the bent part.

### BRIEF DESCRIPTION OF THE DRAWINGS

FIG. 1 is a schematic diagram showing a part of a conventional electrode slurry production device.
FIG. 2 is a schematic diagram showing a part of an electrode slurry production device according to an embodiment of the present disclosure.
FIG. 3 is a schematic enlarged perspective view showing the inside of the powder pipe of FIG. 2.
FIG. 4 is a schematic cross-sectional view of the inside of the powder pipe as viewed from direction A in FIG. 3.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

On the other hand, since sizes and thicknesses of each element shown in the drawings are arbitrarily given for better understanding and ease of description, the present inventive concept is not limited to the illustrated sizes and thicknesses.

Further, throughout the description, when a portion is referred to as "including" or "comprising" a certain component, it means that the portion can further include other components, without excluding the other components, unless otherwise stated.

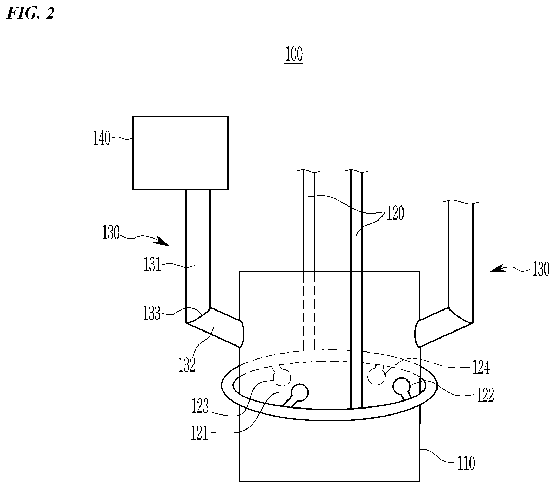

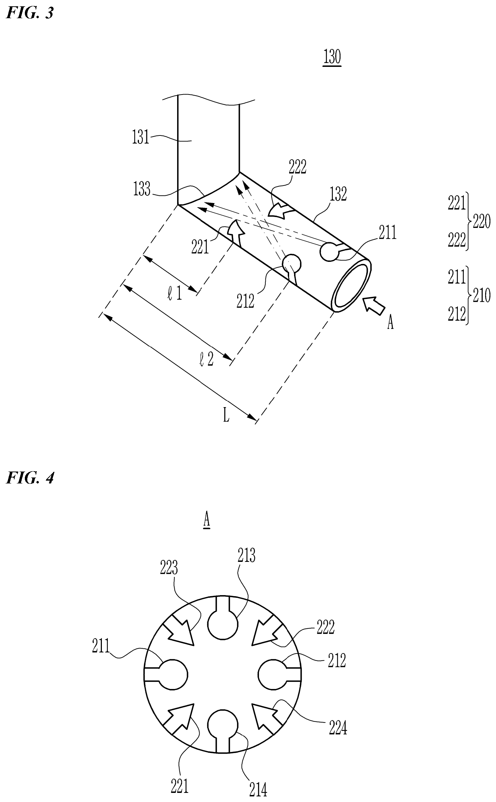

FIG. 2 is a schematic diagram showing a part of an electrode slurry production device 100 according to an embodiment of the present disclosure. FIG. 3 is a schematic enlarged perspective view of the inside of one powder pipe 130 among them. FIG. 4 is a schematic cross-sectional view of the powder pipe 130 as viewed from direction A in FIG. 3.

Referring to FIGS. 2 and 3, an electrode slurry production device 100 according to the present disclosure comprise: a mixer 110 in which an electrode material and a solvent are mixed; at least one liquid pipe 120 that is connected to the mixer 110 and introduces the solvent into the mixer 110; and at least one powder pipe 130 that is connected to the mixer 110 and introduces a powder electrode material into the mixer 110.

To explain the powder pipe 130, the powder pipe 130 will be specifically discussed. The powder pipe 130 includes a bent part 133 in which the powder introducing direction changes, and includes a first pipe 131 connected to a powder tank 140 in which a powder is stored on the basis of the bent part 133 and a second pipe 132 connected to the mixer 110, and the inside of the second pipe 132 is formed with at least one high-pressure DIW spray nozzle 210 that introduces distilled water (DI water, DIW) into the powder pipe 130 and at least one air spray nozzle 220 that introduces air.

Of course, when two or more powder pipes are included, the high-pressure DIW spray nozzle 210 and the air spray nozzle 220 as described above are similarly applied to other powder pipes.

Meanwhile, referring to FIG. 4, which is a cross-sectional view of the powder pipe of FIG. 3, two or more high-pressure DIW spray nozzles 210 and two or more air spray nozzles 220 are included, so that four kinds 211, 212, 213, 214 of high-pressure DIW spray nozzles 210 and four kinds 221, 222, 223, 224 of air spray nozzles 220 may be formed.

When the high-pressure DIW spray nozzles 210 and the air spray nozzles 220 are formed in a plurality of numbers in this manner, they may be formed at regular intervals from each other.

When four or more nozzles are formed as described above, the powder accumulating inside the pipe can be entirely washed away by the DIW spray, which is more preferable.

This high-pressure DIW spray nozzle 210 may introduce the powder at a pressure of 2 bar to 10 bar, more specifically, at a pressure of 3 bar to 8 bar, and more specifically, at a pressure of 3 bar to 5 bar, in order to prevent the powder from accumulating in the powder pipe 130.

At this time, if the introduction is performed at a lower pressure than the above range, the effect intended by the present disclosure cannot be obtained, and performing the introduction at a higher pressure causes difficulties in the operation and increases equipment costs, etc.

Meanwhile, since the powder pipe 130 includes a bent part 133 where the powder introducing direction changes, more powder may accumulate in the bent part 133, which changes the composition of the final slurry or causes slurry quality issues.

Therefore, according to the present disclosure, the high-pressure DIW spray nozzle 210 may be formed in a form that sprays DIW toward the bent part 133. That is, the high-pressure DIW spray nozzle 210 formed in the second pipe may be formed in the opposite direction to the flow of powder to spray DIW on the bent part 133. At this time, the DIW introduction may be performed for 1 to 6 minutes, and more specifically, for 2 to 5 minutes.

If the DIW is introduced for too long a time outside the above range, the overall process time increases and the efficiency decreases, and if the DIW is introduced for too short a time, sufficient cleaning of the powder may not be achieved, which is not preferable.

This makes it possible to prevent powder from accumulating in the bent part 133 and to clean the inside of the powder pipe 130 along with the production of the electrode slurry.

Here, when the amount of DIW required for producing the electrode slurry is measured by a meter, the amount is determined and introduced at the high-pressure DIW spray nozzle 210 and the liquid pipe 120 in the bent part 133. In other words, the total amount introduced into the high-pressure DIW spray nozzle 210 and the liquid pipe 120 may be appropriately distributed/introduced so as to correspond to the total amount of DIW required. For example, the entire amount be introduced by the amount of DIW measured through the high-pressure DIW spray nozzle 210, or if cleaning through the high-pressure DIW spray nozzle 210 is not required, the entire amount may be introduced through the liquid pipe 120, or a combination of the two, specifically, the minimum amount required for cleaning may be introduced through the high-pressure DIW spray nozzle 210, and the remaining required amount may be introduced through the liquid pipe 120.

Meanwhile, if the high-pressure DIW spray nozzle 210 is formed in the first pipe 131, it is not necessary to spray DIW in the opposite direction to the flow of the powder, however, since a weak pump and a self-weight measuring method are employed, it is preferable to form it as close to the mixer as possible on the lower side within the powder pipe 130.

Therefore, the high-pressure DIW spray nozzle 210 may be formed, for example, at a point between 1/3 and 9/10 of the total length L of the second pipe 132 on the basis of the longitudinal direction, which is the powder introducing direction of the second pipe 132 from the bent part 133. In other words, the length l2 from the bent part 133 to the position where the high-pressure DIW spray nozzle 210 is formed may be 1/3 to 9/10 (l2 = 1/3L to 9/10L) of the total length L of the second pipe 132.

If the high-pressure DIW spray nozzle is formed outside the above range and close to the bent part 133, it is difficult to spray DIW toward the bent part 133, making sufficient the cleaning difficult, and if the high-pressure DIW spray nozzle is formed too close to the mixer 110, a greater pressure is required to spray DIW up to the bent part 133, which is not preferable.

On the other hand, if the inside of the powder pipe 130 is cleaned using DIW along with the production of the electrode slurry, residual DIW may remain inside the powder pipe 130, and rather, the powder may stick during the subsequent production process and accumulate in even larger quantities inside the powder pipe 130.

Therefore, when the high-pressure DIW spray nozzle 210 is formed in the powder pipe 130 as in the present disclosure to perform electrode slurry production and pipe cleaning at the same time, it is preferable to perform air drying in order to remove the DIW remaining by DIW spraying after the operation of the high-pressure DIW spray nozzle 210.

Thus, according to the present disclosure, the air spray nozzle 220 is formed together with the high-pressure DIW spray nozzle 210 in the second pipe 132.

Therefore, when the DIW spraying is completed, the air spray nozzle 220 can introduce air into the second pipe 132.

At this time, the air spray is for removing the DIW remaining in the second pipe 132, and introducing the air at a certain pressure or higher is more preferable for drying. Therefore, the air spray nozzle 220 may introduce air at a pressure of 1 bar to 5 bar, specifically, at a pressure of 2 bar to 5 bar, and more specifically, at a pressure of 2 bar to 4 bar.

If the air is sprayed at too low a pressure and outside the above range, sufficient drying may not be achieved, drying may require a long time, and production efficiency may be poor. Introducing air at too high a pressure may cause difficulties in operation and increase equipment costs.

The air may be air between 20 and 30 degrees Celsius, and more specifically, air between 23 and 25 degrees Celsius.

The air is for removing the remaining DIW in the powder pipe 130 and injected for drying purposes, however, if air at too high a temperature is introduced, the production cost increases, and the temperature inside the powder pipe 130 increases as a whole, which may not be preferable in terms of safety.

In addition, the air introduction may be performed for 30 to 120 seconds, specifically, 60 to 120 seconds.

If the air introduction is also performed for a time shorter than the above range, the DIW may not be sufficiently dried, and more powder may be entangled and accumulated in the subsequent electrode slurry production process. If the air is introduced for too long a period of time, it may result in excessive increase in process time and decrease in production efficiency, which is not preferable.

Meanwhile, the air spray nozzle 220 may be formed at a point closer to the bent part 133 than the high-pressure DIW spray nozzle 210.

This is because, in the case of air spray, the actual reaching distance is shorter according to the pressure and state compared to DIW spray, and introducing the air directly onto the bent part 133 is advantageous for drying
The air spray nozzle 220 may be formed at a position closer to the bend part 133 than the position of the high-pressure DIW spray nozzle 210, for example, at a point between 1/4 and 4/5 of the total length L of the second pipe 132 on the basis of the longitudinal direction, which is the powder introducing direction of the second pipe 132 from the bent part 133. In other words, the length l1 from the bent part 133 to the position where the air spray nozzle 220 is formed may be 1/4 to 4/5 (l1 = 1/4L to 4/5L) of the total length L of the second pipe 132.

If the air spray nozzle is formed outside the above range and far from the bent part 133, the DIW remaining in the bent part 133 may not be sufficiently dried, or it may take a long time to dry sufficiently, which is not preferable.

Therefore, specifically, the electrode slurry production device according to the present disclosure is configured to form a high-pressure DIW spray nozzle in the powder pipe and perform DIW spray toward a bent part where the direction of the powder pipe changes, whereby not only the inside of the powder pipe can be cleaned simultaneously with the production of the electrode slurry, thereby preventing the accumulation of powder inside the powder pipe, but also after the DIW spraying is completed, air is introduced into the powder pipe using an air spray nozzle to remove the remaining DIW, which prevents the inside of the powder pipe from becoming wet and prevents the accumulation of powder inside the powder pipe, so that the slurry solid content spec-out phenomenon can be eliminated even in the continuous production of electrode slurry.

Furthermore, since the powder pipe can be cleaned simultaneously with the production of the electrode slurry, pipe clogging does not occur, and thus manpower or time consumed due to pipe clogging can be eliminated.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

## Claims

1. A device for producing an electrode slurry, comprising:
a mixer in which an electrode material and a solvent are mixed;
at least one liquid pipe that is connected to the mixer and introduces the solvent into the mixer; and
at least one powder pipe that is connected to the mixer and introduces a powder electrode material into the mixer,
wherein the powder pipe comprises a bent part in which the powder introducing direction changes, and comprises a first pipe connected to a powder tank in which a powder is stored on the basis of the bent part and a second pipe connected to the mixer, and the inside of the second pipe is formed with a high-pressure DIW spray nozzle that introduces distilled water (DI water, DIW) into the powder pipe and an air spray nozzle that introduces air.

2. The device for producing an electrode slurry according to claim 1, wherein:
the high-pressure DIW spray nozzle and the air spray nozzle each include four or more nozzles.

3. The device for producing an electrode slurry according to claim 1, wherein:
the high-pressure DIW spray nozzle introduces DIW at a pressure of 2 bar to 10 bar.

4. The device for producing an electrode slurry according to claim 1, wherein:
the high-pressure DIW spray nozzle sprays DIW toward the bent part.

5. The device for producing an electrode slurry according to claim 1, wherein:
the DIW introduction is performed for 1 to 6 minutes.

6. The device for producing an electrode slurry according to claim 1, wherein:
the high-pressure DIW spray nozzle is formed at a point between 1/3 and 9/10 of the total length of the second pipe on the basis of the longitudinal direction, which is the powder introducing direction of the second pipe from the bent part.

7. The device for producing an electrode slurry according to claim 1, wherein:
the air spray nozzle introduces air into the second pipe when the DIW spraying is completed.

8. The device for producing an electrode slurry according to claim 1, wherein:
the air spray nozzle sprays air at a pressure of 1 bar to 5 bar.

9. The device for producing an electrode slurry according to claim 1, wherein:
the air is air between 20 and 30 degrees Celsius.

10. The device for producing an electrode slurry according to claim 1, wherein:
the air introduction is performed for 30 to 120 seconds.

11. The device for producing an electrode slurry according to claim 1, wherein:
the air spray nozzle is formed at a point closer to the bent part than the high-pressure DIW spray nozzle.

12. The device for producing an electrode slurry according to claim 11, wherein:
the air spray nozzle is formed at a point between 1/4 and 4/5 of the total length of the second pipe on the basis of the longitudinal direction, which is the powder introducing direction of the second pipe from the bent part.
